# EUROPÄISCHE PATENTSCHRIFT

(11) **EP 0 761 109 B1**
(45) Veröffentlichungstag und Bekanntmachung des Hinweises auf die Patenterteilung: **13.01.1999**
(21) Anmeldenummer: 96110904.8
(22) Anmeldetag: 05.07.1996
(51) Int. Cl.: A41D 13/00, B01D 53/64

(54) **Mundschutzfilter**
Breathing mask
Masque respiratoire

(30) Priorität: 15.08.1995 DE 19529817; 20.03.1996 DE 19610880
(43) Veröffentlichungstag der Anmeldung: 12.03.1997
(73) Patentinhaber: Institut für Umwelttechnologie und Umweltanalytik e.V., 47229 Duisburg (DE)
(72) Erfinder: Lichtnecker, Herbert, Dr. med. Dipl.-Chem., 40699 Erkrath (DE); Erich, Egon, Dr.-Ing., 47475 Kamp-Lintfort (DE); Goldschmidt, Ralf, Dipl.-Ing., 47279 Duisburg (DE); Schöppe, Günter, Dipl.-Volksw., 40668 Meerbusch (DE)
(74) Vertreter: Cohausz & Florack

(56) Entgegenhaltungen:
- WO-A-81/01019
- WO-A-91/08829
- WO-A-94/00220
- DE-A- 4 131 811

## Beschreibung

Die Erfindung betrifft einen einen Mundschutzfilter, der beispielsweise zur Senkung der Quecksilberbelastung von Praxispersonal bei Dentalbehandlungen eingesetzt werden kann.

Zahnamalgam wird durch Vermischung von etwa gleichen Gewichtsanteilen Legierungspulver und flüssigem Quecksilber hergestellt. Die zunächst plastische Masse, die vom Zahnarzt appliziert wird, erhärtet nach kurzer Zeit. Während der Amalgamverarbeitung kommt es zu einer Hg-Dampfbelastung beim Patienten, beim zahnärztlichen Personal sowie zu einer Kontamination der Umgebung mit Quecksilber.

Nach dem derzeitigen wissenschaftlichen Kenntnisstand und unter Berücksichtigung der durch Nahrung, Wasser und Luft ohnehin für den Menschen bestehenden Quecksilberbelastungen gibt es keinen begründeten Verdacht für ein medizinisch nicht vertretbares gesundheitliches Risiko beim Patienten durch Tragen, Legen oder Entfernen von Amalgamfüllungen. Für die Anwendung von Amalgamen in der zahnärztlichen Therapie wurde vom Bundesgesundheitsamt eine Orientierungshilfe erarbeitet. Danach sollen Amalgame nur noch in den kautragenden Flächen (Backenzahnbereich) eingesetzt werden. Ihr Einsatz sollte auf ein unbedingt notwendiges Maß eingeschränkt werden um die allgemeine Quecksilberbelastung des menschlichen Körpers zu verringern.

Verschluckte, ausgehärtete Amalgamlegierungen sind chemisch relativ inert. Aus den Amalgamfüllungen der Zähne kann jedoch metallisches und in Verbindungen vorliegendes Quecksilber in Abhängigkeit von der Oberflächenbeschaffenheit der Füllungen freigesetzt werden (Zander, et al. 1993). Metallisches Quecksilber weist beim Verschlucken eine Resorptionsrate von weniger als 0,1 % auf. Das Einatmen der Quecksilberdämpfe führt zu einer Resorption des Quecksilberdampfes ins Blut zu etwa 80 %. Quecksilber wird dort in die Ionenform oxidiert. Die biologische Halbwertzeit für Quecksilber im Blut, in den Nieren und in der Leber beträgt beim Menschen mehere Tage bis max. zwei Monate. Dies gilt nicht für eine Quecksilberspeicherung im zentralen Nervensystem, hier ist von einer Halbwertzeit von etwa 100 Tagen bis zu Jahren auszugehen (WHO 1988) .

In älteren Veröffentlichungen wird die allgemeine Raumluftbelastung mit Quecksilber in Zahnarztpraxen zwischen 20 und 30 µg/m³ Luft angegeben (Kropp 1964, Ketterl und Lamprecht 1964). In den fünfziger und sechziger Jahren kam es durch die offene Handhabung von flüssigem Quecksilber aber auch zu wesentlich höheren Quecksilberbelastungen in der Raumluft. In der Literatur finden sich Werte von 40 bis 100 µg/m³ (Böcker und Marxhors 1965) .

Quecksilberdämpfe werden gerade beim Legen und Entfernen von Amalgamfüllungen verstärkt freigesetzt. Der derzeit gültige Luftgrenzwert (MAK-Wert) für metallisches Quecksilber am Arbeitsplatz liegt beim 100 µg/m³. Studien zur beruflichen Exposition mit Quecksilber besagen, daß Schwellenwerte von 150 µg/1 Urin oder 35 µg/1 Blut bereits nach mindestens einjähriger Exposition mit einer Luftkonzentration von 50 µg/m³ erwartet werden. Darauf beruht die Empfehlung der WHO von 1980, daß bei Langzeitexposition die zeitlich gewogene Luftkonzentration von Quecksilber nicht über 25 µg/m³ liegen soll. Eine Gefährdung von Zahnarzt und Personal durch Quecksilberdampf ist demnach trotz Einhaltung des MAK-Wertes bei Langzeitexposition nicht auszuschließen.

Außerdem befinden sich Zahnärzte und zahnärztliches Personal in unmittelbarer Nähe der Entstehungsstelle der Quecksilberdämpfe und atmen diese in einer relativ hohen Konzentration ein.

Ausreichend Schutz würden handelsübliche Atemmasken mit einem speziellen Quecksilberfilter bieten. Diese Schutzmaßnahmen sind aber im Zahnarztbereich aufgrund des Aussehens und des schlechten Tragekomforts der Masken nicht durchführbar. Aus diesem Grund sieht die Erfindung einen Mundschutz vor, der speziell zur Abscheidung von Quecksilberdämpfen geeignet ist und gleichzeitig einen hohen Tragekomfort und ein ansprechends Äußeres vereint. Der Anwendungsbereich des Mundschutzes ist auch auf alle anderen Bereiche, in dem schädliche Gase oder Geruchbelästigungen auftreten und der Einsatz von Atemmasken nicht möglich oder aufgrund der geringen Konzentration gesetzlich nicht vorgeschrieben ist, zu erweitern. Insbesondere sind dies Kliniken, Laboratorien, Polizei, Feuerwehr, Katastrophenschutz und Bundeswehr u.a.. Neben Quecksilber, Gerüchen und Gasen soll der Filter auch gegen Pilze, Pilzsporen und andere toxische Stoffe wirksam sein.

Quecksilber kommt nicht nur anorganisch gebunden, sondern auch in einer Vielzahl organischer Verbindungen vor. Es ist als einziges Metall bei normalen Umgebungsbedingungen flüssig und weist einen hohen Dampfdruck auf. Entsprechend den drei chemischen Hauptformen unterscheidet die Toxologie elemetares Quecksilber (Hg°), Quecksilbersalze (Hg^{I}, Hg^{II}) und organisch gebundenes Quecksilber. Entscheidend für den toxischen Wirkungsmechanismus ist die sehr stabile chemische Bindung zwischen Quecksilber und den Schwefelgruppen zahlreicher Proteine.

Amalgame entstehen durch Vermischung etwa gleicher Gewichtsanteile Legierungspulver und flüssigen Quecksilbers zu einer plastischen Masse. Bei der Aushärtung von Amalgam werden durch Kondensation verstärkt Quecksilberdämpfe frei.

100 g Legierungspulver enthalten typischerweise:

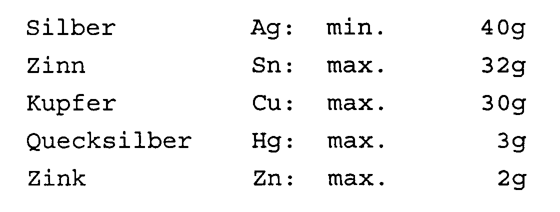

Zur Amalgambildung werden noch ca. 100g metallisches Quecksilber hinzugefügt. Ungefähr 80% der inhalierten Menge dampfförmigen Quecksilbers werden in den Alveolen resorbiert, d.h. gelangen in den Blutstrom. Ursache hierfür ist die hohe Fettlöslichkeit von Quecksilberdampf. Bei Anwesenheit von Enzymen und Spuren von H₂O₂ wird Quecksilber zu Hg^{II} oxidiert. Dieses wird als der initiative Schritt zur toxischen Wirkung von Quecksilber angesehen. Die biologische Halbwertzeit von Hg^{II} im menschlichen Körper wird mit etwa 60 Tagen angegeben. Dies gilt allerdings nicht für das zentrale Nervensystem und das Gehirn, wo eine Halbwertzeit von mehreren Jahren erreicht wird.

Die typischen Symptome einer chronischen Quecksilbervergiftung sind seit langem bekannt und wissenschaftlich gut untersucht. Im Vordergrund stehen Symptome im Bereich des zentralen Nervensystems mit einem sehr allgemeinen Krankheitsbild. Gesundheitliche Effekte werden für besonders empfindliche Personen schon bei einer Belastung im Niedrigdosisbereich beschrieben. Es handelt sich um unspezifische Beschwerden, wie Appetitlosigkeit, Gewichtsverlust, Leistungsschwäche und Adynamie (WHO 1988).

Schutz vor einer arbeitsbedingten Quecksilberbelastung würden Vollmasken nach DIN 58646 o.ä. mit einem speziellen Quecksilberfilter bieten. Der Einatemwiderstand solcher Masken nach DIN beträgt max. 0,5 mbar bei 30 1/min konstant und max. 1,5 mbar bei 95 1/min konstant. Der Vorteil dieser Masken ist ihre hohe Sicherheit. Nachteile solcher Masken sind das nicht unbedingt ansprechende Äußere sowie der schlechte Tragekomfort, verbunden mit eingeschränkter Kommunikationsfähigkeit.

Im allgemeinen tragen Zahnärzte einen Mundschutz. Dieser Mundschutz soll dem Patienten vor Infektionen durch Keime, die vom Arzt ausgeschieden werden, schützen. Gleichzeitig schützt der Mundschutz den Arzt vor frei werdenden Aerosolen und Partikeln. Ein solcher Mundschutz bietet jedoch keinen Schutz gegenüber gasförmigen Substanzen. In der Regel wird ein Mundschutz mehere Stunden getragen und danach entsorgt. Je nach Art der Behandlung ist jedoch ein häufiger Wechsel beispielsweise eines durch Blutspritzer verunreinigten Mundschutzes erforderlich.

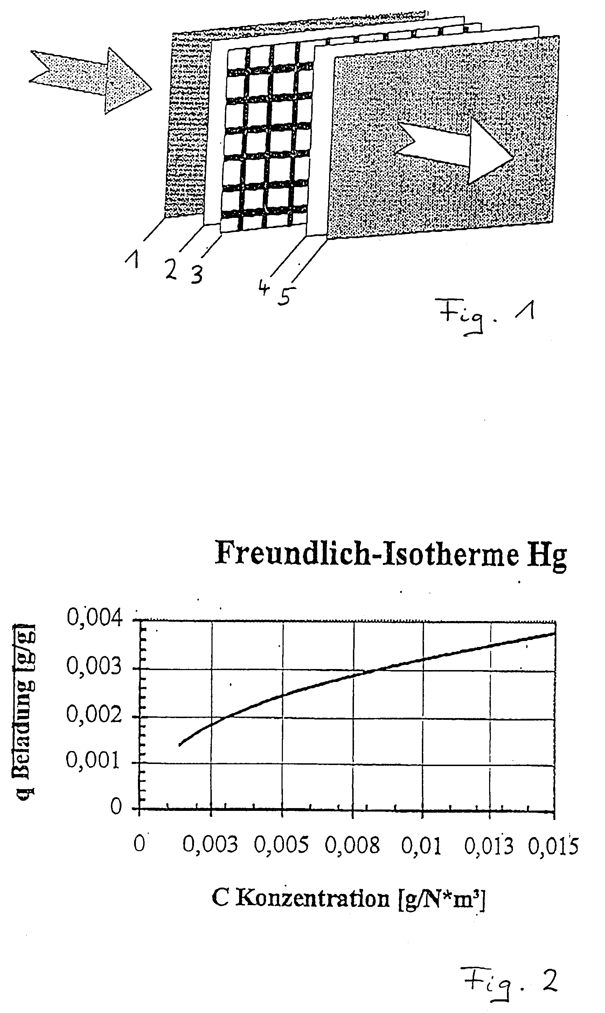

Wie aus der Technik bekannt, bindet Aktivkohle gasförmige Stoffe sorptiv. Da die Luftgeschwindigkeit beim Atmen relativ hoch und die Reaktionszeit die zur Verfügung steht, klein ist, wird die Gleichgewichtsbeladung der Aktivkohle mit Quecksilber, durch die langsam ablaufende Kinetik nicht erreicht. Fig. 2 zeigt die Freundlich-Isotherme von Quecksilber an Aktivkohle bei T = 298 K (Otani et al. 1986).

Festzuhalten ist außerdem, daß die Einsatzgebiete des neuen Mundschutzes nicht nur im zahnärztlichem Bereich liegen sondern auch auf Laboratorien, Kliniken, High-Tech-Bereiche oder Polizei, Feuerwehr, Katastrophenschutz und Bundeswehr zu erweitern sind, da auch hier schädliche Gase auftreten und der Einsatz von Atemmasken nicht möglich oder aufgrund der geringen Konzentration gesetzlich nicht vorgeschrieben ist. Weitere Anwendungsbereiche des Mundschutzes sind die Bereiche, in welchen verstärkt Geruchsbelästigungen auftreten, da die Aktivkohle in der Lage ist, diese störenden Gerüche zu eliminieren. Ausreichend kleine Vliesstrukturen sind darüber hinaus in der Lage, auch Pilze oder Pilzsporen von der eingeatmeten Luft abzusondern. Aus der WO-A-94/00220 ist ein Mundschutzfilter gemäß dem Oberbegriff von Anspruch 1 bekannt.

Der Erfindung liegt die Aufgabe zugrunde, ein Mundschutzfilter so auszugestalten und weiterzubilden, daß die vorerwähnten Nachteile vermieden werden. Insbesondere sollen Zahnärzte und zahnärztliches Personal vor einer Langzeitexposition auch von geringen Quecksilberdampfkonzentrationen geschützt werden. Ziel ist es, die Anreicherung von Quecksilber und anderen toxischen oder gefährlichen Stoffen im zentralen Nervensystem zu vermeiden oder zu mindern und damit einer schleichenden Gesundheitsschädigung vorzubeugen. Um die Atemluft von Zahnärzten und zahnärztlichem Personal frei von Quecksilberdampf zu halten, soll ein Mundschutz entwickelt werden, der für die Abscheidung von Quecksilber geeignet ist. Der Mundschutz muß Quecksilber dauerhaft binden und die Konzentration an Quecksilberdampf in der eingeatmeten Luft deutlich senken. Gleichzeitig sollte der Druckverlust möglichst gering sein, um einen hohen Tragekomfort zu gewährleisten. Außerdem soll der Mundschutz den Patienten nicht durch sein Aussehen verunsichern.

Der Mundschutz soll ferner ein auf Quecksilber abgestimmtes Adsorptiv-/Reaktiv-Filtermedium besitzen, dessen Aufnahmekapazität an Quecksilber so bemessen ist, daß ein 14-Stunden-Arbeitstag gefahrlos möglich ist. Gleichzeitig ist darauf zu achten, daß der Mundschutz einfach zu entsorgen oder zu recyceln ist.

Diese Aufgabe wird erfindungsgemäß durch einen Mundschutzfilter gemäß den Merkmalen des Anspruchs 1 gelöst.

Um die Effektivität der Abscheidung zu steigern, wird die Außenoberfläche des Vlieses mit Gold bedampft. Die Goldschicht bindet dann ebenfalls die Quecksilberdämpfe über eine Amalgambildung und unterstreicht durch ihr ansprechendes Aussehen das Ambiente der Behandlung. Erfindungsgemäß erfolgt eine Kombination eines geeigneten Adsorbens mit einem Amalgambildner. Bevorzugt kommen als Adsorbensmaterialien Aktivkohlen in Frage die bekanntermaßen gute Abscheideeigenschaften bei Schwermetallen aufweisen.

In weiterer Ausgestaltung der Erfindung ist auf die Stützschicht eine Schicht aus Aktivkohle aufkaschiert. Diese Ausgestaltung ist herstellungstechnisch besonders günstig. Die Stützschicht kann auch als Faser-Aktivkohle-Verbundvlies ausgebildet sein oder aber aus gewebten Aktivkohlewhiskern bestehen.

Schließlich ist gemäß einer weiteren Lehre der Erfindung vorgesehen, daß auf das Saugvlies eine Membrane aus Polytetrafluorethylen (PTFE) aufgetragen ist. Die PTFE-Membrane verhindert eine Durchfeuchtung und damit einen zu hohen Druckverlust des bevorzugt als Mundschutz ausgeführten Filters. Die Einhaltung eines tolerierbaren Druckverlustes ist wichtig, da sonst der nötige Tragekomfort nicht gewährleistet ist.

Anhand der gewonnen Kenntnisse über Beladung und Kinetik erfolgt die Auswahl des geeigneten Filtermediums und Adsorbens für den Mundschutz. Aus diesen Materialien wird dann der erfindungsgemäße Mundschutz konfektioniert. Außerdem ist auch eine Erweiterung des Einsatzgebietes des Mundschutzes auf andere Anwendungsfälle möglich.

Einen möglichen Aufbau des Filtermediums zeigt Fig. 1. Die erste Schicht besteht aus einem goldbedampften Faservlies 1 an dem Quecksilber über eine Amalgambildung abgeschieden wird. Danach kommt eine Stützschicht 2, auf der kaschierte Aktivkohle 3 aufgebracht ist. An der Aktivkohle wird Quecksilber sorptiv abgeschieden. Die letzte Schicht besteht aus einem Saugvlies 4 auf dem eine PTFE-Membrane 5 aufgetragen ist. Die Pfeile zeigen die Richtung der Strömung des Quecksilberdampfes beim Einatmen.

Es wurden verschiedene Kombinationen von Sorbenzien und Fasern wie z.B. Textilfasern oder Glasfasern untersucht. Einen besonders hohen Abscheidegrad haben Filter, bei denen das goldbedampfte Filtermedium als Faser-Aktivkohle-Verbundvlies ausgebildet ist. Auch haben sich gewebte Aktivkohlewhisker, welche auch zusätzlich mit anderen Materialien verwebt sein können, bewährt.

## Patentansprüche

1. Mundschutzfilter zum Schutz vor Quecksilberbelastungen bei Dentalbehandlungen mit einem porösen Faservlies,
**dadurch gekennzeichnet**, daß die äußere Oberfläche des Faservlieses (1) mit Gold bedampft ist und daß neben dem Faservlies (1) eine ein anderes, zum Schutz vor Quecksilberbelastungen Wirksames, Adsorbens enthaltende Stützschicht (2) und eine weitere Schicht aus einem Saugvlies (4) vorgesehen sind.

2. Filter nach Anspruch 1,
**dadurch gekennzeichnet**, daß als Adsorbens Aktivkohle vorgesehen ist.

3. Filter nach Anspruch 2,
**dadurch gekennzeichnet**, daß auf die Stützschicht (2) eine Schicht (3) aus Aktivkohle aufkaschiert ist.

4. Filter nach Anspruch 2,
**dadurch gekennzeichnet**, daß die Stützschicht (2) als Faser-Aktivkohle-Verbundvlies ausgebildet ist.

5. Filter nach Anspruch 2,
**dadurch gekennzeichnet**, daß die Stützschicht (2) aus gewebten Aktivkohlewhiskern besteht.

6. Filter nach einem der Ansprüche 1 bis 5,
**dadurch gekennzeichnet**, daß auf das Saugvlies (4) eine Membrane (5) aus Polytetrafluorethylen (PTFE) aufgetragen ist.

## Claims

1. A month protection filter for protection from mercury exposure during dental treatments with a porous fiber nonwoven, characterized in that gold is vapor deposited on the outside surface of the fiber nonwoven (1), and in addition to the fiber nonwoven (1), a supporting layer (2) containing another adsorbent to protect against mercury exposure is provided, and another layer of an absorbent nonwoven (4) is also provided.

2. A filter according to Claim 1, characterized in that activated carbon is used as the adsorbent.

3. A filter according to Claim 2, characterized in that a layer (3) of activated carbon is laminated onto the supporting layer (2).

4. A filter according to Claim 2, characterized in that the supporting layer (2) is designed as a composite fiber-activated carbon nonwoven.

5. A filter according to Claim 2, characterized in that the supporting layer (2) is made of woven activated carbon whiskers.

6. A filter according to one of Claims 1 through 5, characterized in that a membrane (5) of polytetrafluoroethylene (PTFE) is applied to the absorbent nonwoven (4).

## Revendications

1. Filtre respiratoire pour protection contre les charges de mercure lors de traitements dentaires, comprenant un nontissé poreux, caractérisé en ce que la surface extérieure du nontissé (1) est métallisée à l'or, et en ce qu'en plus du non tissé, on a prévu une couche étaiement (2) contenant un autre agent d'absorption à protection efficace contre les charges de mercure, et une autre couche faite d'un non tissé absorbant.

2. Filtre selon la revendication 1, caractérisé en ce qu'on prévoit du charbon actif comme agent d'absorption.

3. Filtre selon la revendication 2, caractérisé en ce qu'une couche (3) de charbon actif est contre-collée sur la couche étaiement (2).

4. Filtre selon la revendication 2, caractérisé en ce que la couche étaiement (2) est réalisée sous forme de non tissé composite fibres-charbon actif.

5. Filtre selon la revendication 2, caractérisé en ce que la couche étaiement (2) se compose de whiskers de charbon actif.

6. Filtre selon l'une des revendications 1 à 5, caractérisé en ce qu'une membrane (5) en polytétrafluoréthylène (PTFE) est appliquée sur le non tissé absorbant (4).
